# EUROPEAN PATENT SPECIFICATION

(11) **EP 1 858 105 B1**
(45) Date of publication and mention of the grant of the patent: **28.04.2010**
(21) Application number: 07107910.7
(22) Date of filing: 10.05.2007
(51) Int. Cl.: H01M 8/04, H01M 8/10

(54) **Fuel cell system with an integrated fuel recycling module**
Brennstoffzellensystem mit einem integrierten Brennstoffrückführungsmodul
Système de piles à combustible avec un module de recyclage de combustible intégré

(30) Priority: 19.05.2006 KR 20060044994
(43) Date of publication of application: 21.11.2007
(73) Proprietor: Samsung SDI Co., Ltd., Gyeonggi-do (KR)
(72) Inventor: Hong, Ming-zi, Gyeonggi-do (KR); Yasuki, Yoshida, Gyeonggi-do (KR); Cho, Eun-suk, Gyeonggi-do (KR); Kweon, Ho-jin, Gyeonggi-do (KR)
(74) Representative: Grey, Ian Michael

(56) References cited:
- WO-A-02/49138
- WO-A-2005/122304
- WO-A-2005/122312
- US-A- 5 773 162
- US-A1- 2002 155 336
- US-A1- 2003 226 763
- US-A1- 2005 255 359

## Description

The present invention relates to a fuel cell system.

As technological fields such as electronics, telecommunications and semiconductor engineering, etc. have recently been rapidly developed, a portable electronic apparatus such as a cellular phone, a notebook computer and a personal digital assistant (PDA), and a wire/wireless telecommunication network such as an Internet and digital multi-media broadcasting (DMB) have become internationally widespread. The portable electronic apparatus allows a subscriber to enjoy multimedia such as a movie anytime and anywhere irrespective of time and place. Therefore, there is needed a power supply which is capable of supplying electric power to the portable electronic apparatuses for a long time. For that reason, a direct methanol fuel cell has been attracting attention for use asa power supply.

The direct methanol fuel cell (DMFC) includes a polymer electrolyte membrane such as perfluoro polymer having good conductivity of hydrogen ions, and anode and cathode electrodes adhered to opposite sides of the electrolyte membrane. The direct methanol fuel cell generates electricity through an electrochemical reaction between fuel such as methanol or the like supplied to the anode electrode and an oxidant such as air (oxygen) supplied to the cathode electrode. In the DMFC, an organic fluid fuel such as methanol is directly supplied to the anode electrode, so that a fuel reformer or the like is not needed. Therefore, the fuel cell system like the DMFC has advantages in that it can be easily configured and small in size as compared with other fuel cell systems.

In the DMFC, the electrochemical reaction between the anode electrode and the cathode electrode is as follows:

[Reaction formula 1]

Anode: CH₃OH + H₂O → CO₂ + 6H⁺ + 6e⁻
Cathode: O₂ + 4H⁺ + 4e⁻ → 2H₂O

Meanwhile, because the DMFC directly supplies the liquid fuel to the anode electrode, its fuel consumption and output efficiency are relatively low as compared with other fuel cell systems. Accordingly, there has been proposed technology that unreacted fuel not reacted in the DMFC and discharged is circulated and recycled. For example, in most of the DMFC systems, the unreacted fuel except byproducts such as carbon dioxide produced by an oxidation reaction of the fuel among the fluids coming out from the anode electrode is stored in a mixing tank, and the stored unreacted fuel is supplied again to the anode electrode.

However, the DMFC system has to additionally include a carbon dioxide remover to discharge the byproducts such as carbon dioxide in order to enhance the efficiency of the system; a mixing tank and, a pump for supplying the unreacted fuel to the anode electrode. Therefore, the size of the DMFC system becomes large, so that it is difficult to apply to a portable apparatus.

The foregoing discussion is to provide background information of fuel cell systems, and does not constitute an admission of prior art.

It is known from WO 02/49138 to provide a fuel cell and an integrated fuel recycling module, comprising a housing having a chamber and an outer surface, an inlet opening in the housing for the flow of unreacted fuel and other products emitted by the fuel cell into the chamber and, an outlet opening in the housing through which collected fuel is discharged from the chamber, wherein the housing also comprises a first channel having a first opening for the flow of collected fuel discharged through the outlet opening into the first channel, said first channel having a second opening connected to the fuel cell through which collected fuel is discharged from the first channel out of the housing and into the fuel cell, said the fuel cell system also comprising a pump connecting the outlet opening and first opening said pump being operable to pump collected fuel discharged through said outlet opening through said first opening. A fuel recycling module is also known from US 5773162.

A fuel cell system according to the invention is **characterised in that** the outlet opening is in the outer surface of the housing such that collected fuel is discharged from the housing and into the pump through said outlet opening, the first opening of the first channel also being provided in the outer surface of the housing such that fuel flows from the pump back into the housing and into the first channel through the first opening in response to operation of said pump.

Preferred features of the fuel cell system of the invention are defined in dependent claims. 2 to 9.

According to the invention there is also provided a method of recycling fuel in a fuel cell system according to claim 10.

A preferred method step of the invention is defined in claim 11.

These and other aspects and advantages of the invention will become apparent and more readily appreciated from the following description of the embodiments which is given by way of example only, and taken in conjunction with the accompanying drawings of which:
Figure 1 is a plan view of a fuel feeder housing forming part of the fuel cell system according to an embodiment of the present invention;
Figure 2A is a plan view of a connector coupled to the fuel feeder housing of Figure 1;
Figure 2B is a photograph showing that the fuel feeder housing of Figure 1 and a fuel cartridge are mounted to an application;
Figure 3 is a photograph showing a peripheral module using the fuel feeder housing of Figure 1;
Figure 4 is a block diagram of a direct methanol fuel cell system employing a peripheral module according to an embodiment of the present invention;
Figure 5 is a plan view of a fuel feeder housing forming part of the fuel cell system according to an embodiment of the present invention; and
Figure 6 is a block diagram of a direct methanol fuel cell system employing a peripheral module using the fuel feeder housing of Figure 5.

Hereinafter, various embodiments of the present invention will be described with reference to accompanying drawings, wherein like numerals refer to like elements throughout.

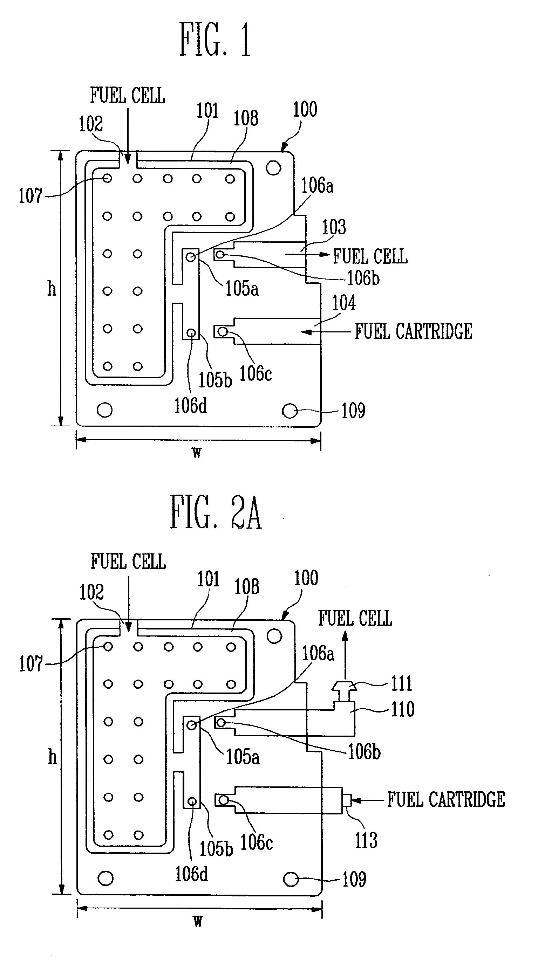

Figure 1 is a plan view of a fuel feeder housing forming part of the fuel cell system according to an embodiment of the present invention. Referring to Figure 1, a fuel feeder housing 100 according to the illustrated embodiment of the present invention includes a chamber 101, connected to a fuel cell and to a fuel cartridge to store fuel to be used in the fuel cell, for storing and recycling unreacted fuel unused in and discharged from the fuel cell; a first connecting portion 102 and second connecting portions 103 and 105a through which fluid can flow in and out the chamber 101; and a base member integrally formed with third connecting portions 104 and 105b connecting the fuel cartridge and the fuel cell. Further, the fuel feeder housing 100 includes a gas-liquid separator 108 installed in correspondence to an opening 107 of the chamber 101 and discharging gas from the inside of the chamber 101.

The base member is made of metal having corrosion resistance to fuel such as methanol, ethanol, liquefied hydrogen, naphtha, liquefied petroleum gas, etc. or a thermoplastic resin such as polycarbonate, Peek, etc. In the discussed or other embodiments, the base member has a shape to be fitted to an installation region, i.e., a dead volume of the application. In this embodiment, the base member has a height of about 6.5cm, a width of about 4.5cm and a thickness of about 0.8cm to achieve the compactness and the light weight thereof. Further, the base member is formed with a hole, i.e., an opening 107 to discharge undesired gas, e.g., carbon dioxide among fluids introduced into the chamber 101.

The chamber 101 occupies an inner whole region of the base member except the connecting portions 102, 103, 104, 105a and 105b and a fastening hole 109 for settling the base member. For example, the chamber 101 has a curved-shape. The shape of the chamber 101 is formed by bending the chamber 101 at a predetermined angle (e.g., a right angle) in consideration of positions of the connecting portions 102, 103, 104, 105a and 105b such that the chamber 101 fully occupies the inside of the base member. Alternatively, the chamber 101 may be bent once or many times. Further, the shape of the chamber 101 may be varied in correspondence to shapes of the dead volume.

Further, the chamber 101 includes the first connecting portion 102 into which unreacted fuel is introduced from the fuel cell; the second connecting portions 105a and 103 to circulate the stored fuel toward the fuel cell; and the third connecting portions 104 and 105b to receive hydrogen-containing fuel from the fuel cartridge. Here, the hydrogen-containing fuel includes methanol, ethanol, liquefied hydrogen, naphtha, desulfurized gasoline, liquefied petroleum gas, etc.

The gas-liquid separator 108 serves to discharge the undesired gas such as carbon dioxide except the unreacted fuel or water introduced into the chamber 101. The gas-liquid separator 108 has an opening corresponding to the first connecting portion 102 so as not to obstruct the first connecting portion 102, and is installed in an inner wall of the chamber 101. Meanwhile, the gas-liquid separator 108 is made of a porous material absorbing the liquid fuel to smoothly circulate the unreacted fuel even though the fuel feeder housing 100 leans in any direction. Particularly, the gas-liquid separator 108 is made of a hydrophobic porous material that can be loaded with the fuel but not physically or chemically reacted with the fuel. For example, the gas-liquid separator 108 is made of a porous material coated with a hydrophobic material and having a pore size of about 10µm. Alternatively, the gas-liquid separator 108 may be provided on the whole inner wall of the chamber 101.

The first connecting portion 102 serves as a passage to introduce the unreacted fuel and water from the fuel cell into the chamber 101, and is connected to an anode outlet of the fuel cell via the minimum pipe arrangement. The second connecting portions 105a and 103 serve as passages to supply the unreacted fuel stored in the chamber 101 to the fuel cell. Between the second connecting portions 105a and 103 are formed two connecting holes 106a and 106b to be connected to a first pump (hereinafter, referred to as an "introducing pump"). The third connecting portions 104 and 105b serve as passages to supply the fuel stored in the fuel cartridge to the fuel cell. Between the third connecting portions 104 and 105b are formed two connecting holes 106c and 106d to be connected to a second pump (hereinafter, referred to as a "fuel pump"). In other words, the connecting portions are isolated in the middle thereof and separated into two connecting portions, respectively. Also, two connecting portions are formed with connecting holes in positions thereof facing each other, respectively. Each connecting hole penetrates the base member and communicates with the outside. Two connecting holes provided in each of the second and third connecting portions allow an inlet and an outlet of the pump to be inserted therein without additional pipes. Meanwhile, the second connecting portion and the third connecting portion are placed in a bent region, i.e., an interior angle region of the chamber 101 having the curved-shape, thereby consulting the compactness of the housing.

According to the illustrated embodiment, the second and third connecting portions are connected to the chamber 101 as being combined as a single channel. In this case, the fuel supplied from the fuel cartridge is mixed with the unreacted fuel not in the chamber 101 but while passing through the second connecting portions 105a and 103, and then supplied to the fuel cell. Through the fastening hole 109, a holding unit such as a screw or the like passes so that the fuel feeder housing 100 is fastened to the application such as a portable electronic apparatus. Alternatively, the fastening hole 109 may be replaced by a proper means as long as it can fasten the fuel feeder housing 100 to the application.

Figure 2A is a plan view of a connector coupled to the fuel feeder housing of Figure 1. Referring to Figure 2A, the fuel feeder housing or fuel recycling module of the fuel cell system according to one embodiments of the present invention further includes a first connector 110 connected to the second connecting portion 103 and a second connector 112 connected to the third connecting portion 104 in addition to the foregoing configuration of the fuel feeder housing. The first connector 110 serves to be readily coupled with a pipe connecting the fuel feeder housing 100 and the fuel cell. Thus, an end 111 of the first connector 110 has a structure to easily insert and hold the pipe. The second connector 112 serves to connect the fuel feeder housing 100 and the fuel cartridge. To easily connect the fuel feeder housing 100 and the fuel cartridge, an end 113 of the second connector 112 protrudes from an outer surface of the base member to be inserted in and held by the fuel cartridge. For example, the first connector 110 can be achieved by a nozzle that allows the fuel stored in the fuel cartridge to be discharged only after being coupled to the outlet of the fuel cartridge.

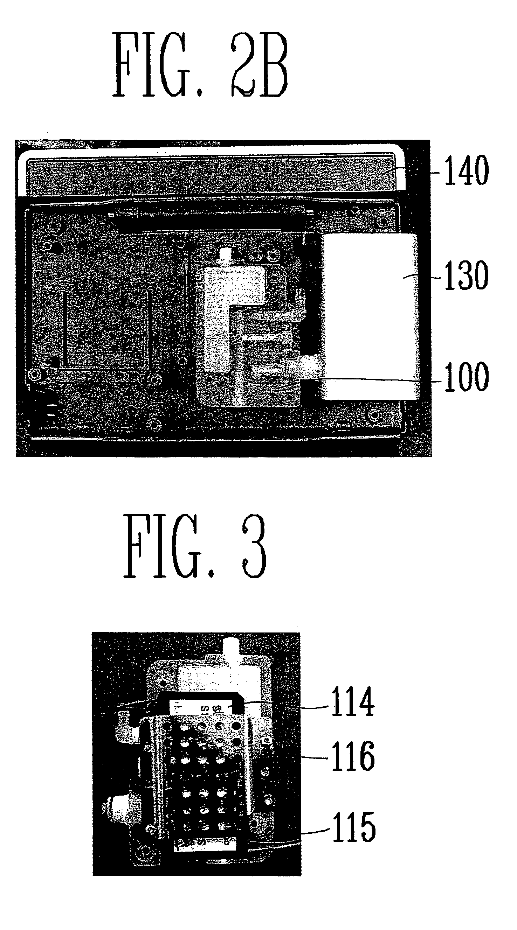

Figure 2B is a photograph showing that the fuel feeder housing of Figure 1 and a fuel cartridge are mounted to an application. In the illustrated embodiment, a portable multimedia player (PMP) having a size of about 15cm x 10cm will be described as an example of the application. In Figure 2B, the PMP is illustrated without a top plate mounted with a controller and a display unit. The fuel feeder housing 100 mounted to the application is installed by utilizing the dead volume of an application main body. As shown in Figure 2B, the fuel feeder housing 100 is coupled to the fuel cartridge 130 provided inside the main body and placed in the dead volume of the middle of the main body. In this embodiment, wiring lines between the fuel feeder housing 100 and a fuel cell stack 140 provided on the main body are omitted. For example, using the fuel feeder housing 100 according to the illustrated or other embodiment of the present invention and a methanol cartridge of 20cc, the PMP can be driven for four hours with a rated output of 5W and for eight hours or more with a rated output of 8W. Thus, the compactness and the light weight of the PMP are achieved.

In Figure 2B, the connecting portions of the fuel feeder housing are formed to be obstructed by a predetermined finishing material at the other portions except portions corresponding to the first, second and third connecting portions 102,103,104, 105a and 105b shown in Figure 2A. Therefore, it is possible to obstruct channels unnecessarily formed when the connecting portions of the fuel feeder housing 100 are formed by a tool such as a drill.

Figure 3 is a photograph showing a peripheral module using the fuel feeder housing of Figure 1. As shown in Figure 3, a peripheral module according to the illustrated embodiment of the present invention includes an introducing pump 114 and a fuel pump 115 attached to one surface thereof. The introducing pump 114 and the fuel pump 115 are closely attached to the base member by a holding unit 116. The introducing pump 114 is a small pump to introduce the fuel to the fuel cell, and the fuel pump 115 is also a small pump to supply the fuel stored in the fuel cartridge to the chamber or the fuel cell. In this embodiment, each of the introducing pump 114 and the fuel pump 115 has a size of about 3.5cmx3.5cm, and a maximum output capacity of about 5cc/min.

The holding unit 116 is used in closely attaching the introducing pump 114 and the fuel pump 115 to the base member. The holding unit 116 is attached to the base member by a screw or the like. The holding unit 116 can be achieved by a heat sink that is made of metal having high heat conductivity and formed with a plurality of holes through which heat generated from the introducing pump 114 and the fuel pump 115 is radiated.

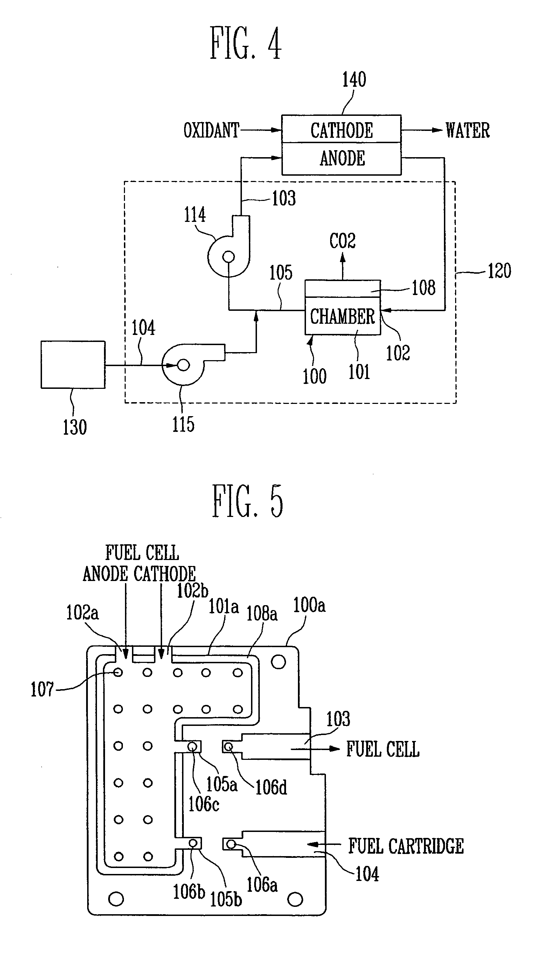

Figure 4 is a block diagram of a direct methanol fuel cell system of the present invention that employs a peripheral module according to the illustrated embodiment of the present invention. Referring to Figure 4, the peripheral module 120 includes the chamber 101 internally provided with the gas-liquid separator 108 to discharge carbon dioxide to consult the compactness and the light weight of the system while enhancing the direct methanol fuel cell 140; the connecting portions 102, 103, 104 and 105 to be connected with the fuel cell 140 or the fuel cartridge 130; the fuel feeder housing 100 having connectors integrally formed in the single base member so as to be easily coupled with the fuel cell 140 or the fuel cartridge 130; and the pumps 114 and 115 attached to the external surface of the fuel feeder housing 100 and directly connected to the middles of the second and third connecting portions, respectively.

According to the illustrated and other embodiments of the present invention, the peripheral module 120 is achieved by modularizing all peripheral units except the fuel cartridge, which support the operation of the fuel cell 140, in order to consult the compactness and the lightweight of a small fuel cell system mounted to the portable electronic apparatus. For example, the existing mixing tank, the carbon dioxide remover and the connecting pipes are modularized in the housing, and the inlet and the outlet of the pump are inserted through the connecting holes formed in the connecting portions of the housing without additional pipes.

Below, operations of the fuel cell system using the peripheral module according to the illustrated embodiment of the present invention will be schematically described. First, when the peripheral module 120 connected to the fuel cartridge 130 and the fuel cell 140 starts operating, the unreacted fuel stored in the chamber 101 is supplied by the introducing pump 114 to the fuel cell 140 through second connecting portions 105 and 103. At this time, the high concentration fuel stored in the fuel cartridge 130 is supplied by the fuel pump 115 and the introducing pump 114 to the fuel cell 140 through the third connecting portion s 104 and 105 and the second connecting portions 105 and 103.

The fuel supplied from the chamber 101 and the fuel supplied from the fuel cartridge 130 are mixed to have proper concentration while passing through the second connecting portion 103. Further, the unreacted fuel, water, carbon dioxide, etc. among the fluids discharged from the fuel cell 140 are introduced into the chamber 101 through the first connecting portion 102. On the other hand, gas such as carbon dioxide or the like among the introduced fluids, which is unnecessary for fuel recycle, is discharged to the outside through the gas-liquid separator 108.

As described above, the peripheral module 120 of the present invention is mounted to the dead volume of the application, thereby contributing the compactness and the light weight of the application, circulating and recycling the unreacted fuel discharged from the anode electrode of the fuel cell 140, supplying the fuel from the fuel cartridge 130 to the fuel cell 140, and enhancing the efficiency of the fuel cell system.

Figure 5 is a plan view of a fuel feeder housing according to an embodiment of the present invention. Referring to Figure 5, a fuel feeder housing 100a according to the illustrated embodiment of the present invention includes a chamber 101a connected to a fuel cell and a fuel cartridge to store fuel to be used in the fuel cell, and storing and recycling unreacted fuel unused in and discharged from the fuel cell; first connecting portions 102a and 102b through which fluid is introduced into the chamber 101a; second connecting portions 103 and 105a through which fluid is discharged from the chamber 101a; and a base member integrally formed with third connecting portions 104 and 105b to be connected with the fuel cartridge. Further, the fuel feeder housing 100a includes a gas-liquid separator 108a installed in correspondence to an opening 107 of the chamber 101a and discharging gas from the inside of the chamber 101a.

As compared with the fuel feeder housing 100 according to the first embodiment, in the fuel feeder housing 100a according to the illustrated embodiment, the second connecting portions and the third connecting portions placed in a bent region, i.e., an interior angle region of the chamber 101a having a curved-shape are independently connected to the chamber 101 a without being combined as a single channel. Thus, the fuel feeder housing 100a of the illustrated embodiment is different from that of the first embodiment in structure that the fuel is introduced from the fuel cartridge to the chamber 101a and the first connecting portions 102a and 102b are connected to anode and cathode outlets of the fuel cell, respectively.

With this configuration, the fuel supplied from the fuel cartridge to the chamber 101a of the fuel feeder housing 101a through the third connecting portions 104 and 105b is mixed with the unreacted fuel and water discharged from the fuel cell within the chamber 101 a, and then the mixed fuel is supplied to the fuel cell through the second connecting portions 105a and 103.

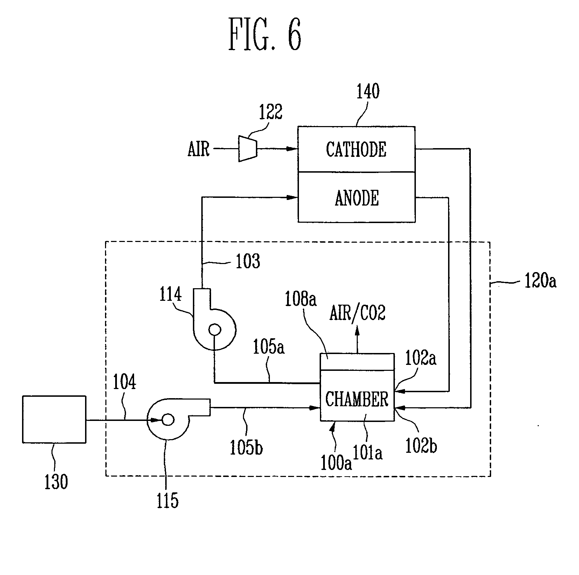

Figure 6 is a block diagram of a direct methanol fuel cell system employing a peripheral module using the fuel feeder housing of Figure 5. Referring to Figure 6, the peripheral module 120a according to the an embodiments of the present invention includes the chamber 101a internally provided with the gas-liquid separator 108a to discharge carbon dioxide to consult the compactness and the light weight of the system while enhancing the direct methanol fuel cell 140; the connecting portions 102, 103, 104, 105a and 105b to be connected with the fuel cell 140 or the fuel cartridge 130; the fuel feeder housing 100a having connectors (not shown) integrally formed in the single base member so as to be easily coupled with the fuel cell 140 or the fuel cartridge 130. Further, the peripheral module 120a includes pumps 114 and 115 attached to the external surface of the fuel feeder housing 100a and directly connected to the middles of the second and third connecting portions, respectively. Further, the fuel cell system according to the illustrated and other embodiment includes an oxidant feeder 122 to supply an oxidant such as air (i.e., oxygen) to a cathode electrode of the fuel cell 140. The oxidant feeder 122 can be achieved by an air pump or a blower.

According to the illustrated embodiment of the present invention, the peripheral module 120a is achieved by modularizing all peripheral units except the fuel cartridge, which support the operation of the fuel cell 140, in order to consult the compactness and the light weight of a small fuel cell system mounted to the portable electronic apparatus. Meanwhile, the peripheral module 120a according to the illustrated embodiment is different from that of the first embodiment in that the fuel stored in the fuel cartridge 130 is introduced into the chamber 101a and then supplied to the fuel cell 140.

Below, operations of the fuel cell system using the peripheral module according to the illustrated embodiment of the present invention will be schematically described. First, the fuel stored in the fuel cartridge 130 is supplied to the chamber 101a of the fuel feeder housing 100a via the third connecting portions 104 and 105b by the fuel pump 115. The supplied fuel has concentration higher than that of the unreacted fuel stored in the chamber 101a. Further, the fluids such as the unreacted fuel, water, etc. discharged from the anode and cathode electrodes of the fuel cell 140 are introduced into the chamber 101a a through two first connecting portions 102a and 102b. On the other hand, unnecessary gas such as carbon dioxide among the introduced fluids is filtered through the gas-liquid separator 108a provided in an inner wall of the chamber 101 a, and then discharged to the outside through a discharging hole of the base member. Then, the fuel stored in the chamber 101a, i.e., the mixed fuel of the unreacted fuel and water introduced from the fuel cell 140 and the high concentration fuel introduced from the fuel cartridge 130 is supplied to the anode electrode of the fuel cell 140 via the second connecting portions 105a and 103 by the introducing pump 114. With these processes, the fuel cell 140 electrochemically oxidizes hydrogen contained in the fuel, thereby generating electricity.

In the foregoing fuel feeder housing and the peripheral module using the same, the structure of introducing water discharged from the cathode electrode of the fuel cell into the chamber may be varied according to the amount of unreacted fuel stored in the chamber and the concentration of the fuel supplied from the fuel cartridge. In other words, recycling water discharged from the cathode electrode of the fuel cell can be optionally selected in consideration of the efficiency of driving the system.

Embodiments of the present invention provide the compact and lightweight fuel feeder housing and the peripheral module using the same, which can be used in the fuel feeders for the PMP, a personal digital assistant (PDA), a cellular phone, etc. As described above, the fuel feeder housing and the peripheral module using the same have not only a structure for efficiently driving the fuel cell, in which the peripheral units, e.g., the mixing tank and the carbon dioxide remover are formed as single body, but also a structure for being easily coupled to the fuel cell or the fuel cartridge. Therefore, the fuel feeder housing and the peripheral module using the same can be readily mounted to the dead volume of the portable electronic apparatus, and contribute the compactness and the light weight of the fuel cell system and the portable electronic apparatus to be mounted with the fuel cell system. Further, the fuel feeder housing according to embodiments of the present invention and the peripheral module using the same can support the stable operation of the fuel cell system regardless of the movement and the directionality of the portable electronic apparatus, thereby enhancing the reliability of the fuel cell system and the portable electronic apparatus.

Although various embodiments of the present invention have been shown and described, it would be appreciated by those skilled in the art that changes might be made in this embodiment without departing from the principles of the invention, the scope of which is defined in the claims.

## Claims

1. A fuel cell system comprising a fuel cell (140) and an integrated fuel recycling module, comprising a housing (100) having a chamber (101) and an outer surface, an inlet opening (102) in the housing (100) for the flow of unreacted fuel and other products emitted by the fuel cell into the chamber (101) and, an outlet opening (106a) in the housing (100) through which collected fuel is discharged from the chamber (101), wherein the housing (100) also comprises a first channel having a first opening (106b) for the flow of collected fuel discharged through the outlet opening (106a) into the first channel, said first channel having a second opening (103) connected to the fuel cell through which collected fuel is discharged from the first channel out of the housing (100) and into the fuel cell, the said fuel cell system also comprising a pump (114) connecting the outlet opening (106a) and first opening (106b) said pump being operable to pump collected fuel discharged through said outlet opening (106a) through said first opening, **characterised in that** the outlet opening (106a) is in the outer surface of the housing (100) such that collected fuel is discharged from the housing (100) and into the pump (114) through said outlet opening (106a), the first opening (106b) of the first channel also being provided in the outer surface of the housing (100) such that fuel flows from the pump (114) back into the housing (100) and into the first channel through the first opening (106b) in response to operation of said pump.

2. The fuel cell system of claim 1, wherein the first opening (106b) is connectable to the outlet opening (106a) using a tube, said pump being connectable to said tube such that collected fuel flows through said pump via said tube.

3. The fuel cell system of any preceding claim, comprising a second channel and a second inlet opening (106d) formed in the housing (100), said second channel having a first opening (106c) and a second opening (113) and a second pump (115) connecting the first opening (106c) of the second channel to the second inlet opening (106d) via a tube, and the second opening (113) of the second channel is connectable to a fuel cartridge for the supply of unrecycled fuel from the fuel cartridge through the second inlet opening (106d) into the housing (100) via the second channel and the first opening (106c) in the channel.

4. The fuel cell system of any preceding claim, wherein the outlet opening (106a) through which collected fuel is discharged from the chamber (101) into the first channel through said pump (114) and the second inlet opening (106d) are both disposed in a conduit in fluid communication with the chamber (100).

5. The fuel cell system of any of claims 1 to 3, wherein the second inlet opening (106d) w is in communication with the chamber (101) such that recycled fuel that flows through the second inlet opening (106d) mixes with the collected fuel in the chamber (101).

6. The fuel cell system of claim 5, wherein the fuel cell comprises an anode and a cathode and the first inlet opening (102) is configured to receive unreacted fuel and/or products emitted by said anode, the second inlet opening (106d) being configured to receive unreacted fuel and/or products emitted from said cathode.

7. The fuel cell system of any preceding claim, further comprising a gas-permeable liquid-impermeable material associated with the chamber (101) and a vent in the body for venting gas from the fuel collected in the chamber (101) that passes through said gas permeable, liquid impermeable material.

8. The fuel cell system of any preceding claim, comprising a fuel cartridge containing fuel, wherein the fuel comprises liquid at room temperature.

9. The fuel cell system of claim 8, wherein the fuel comprises at least one selected from the group consisting of methanol, ethanol, propyl alcohol, butyl alcohol, liquefied hydrogen, naphtha, liquiefied petroleum gas and gasoline.

10. A method of recycling fuel in a fuel cell system having a fuel cell, a fuel recycling module and a pump, said fuel recycling module comprising a housing (100) having a chamber (101) and an outer surface, the method including the steps of allowing unreacted fuel and other products emitted by the fuel cell to flow through an inlet opening (102) in the housing (100) into the chamber (101) and allowing said collected fuel to be discharged from the chamber (101) and the housing (100) through an outlet opening (106a) in the outer surface of the housing (100), said outlet opening being connected to said pump such that said collected fuel flows through said outlet opening into said pump, the housing (100) also comprising a first channel having a first opening (106b) in the outer surface of the housing (100), said first opening (106b) also being connected to said pump, the method including the step of operating the pump so that collected fuel is discharged through the outlet opening (106a) into the pump and from the pump into the first channel via said first opening (106b), said channel having a second opening (103) connected to the fuel cell.

11. The method of claim 10, wherein the housing (100) comprises a second channel and a second inlet opening (106d) formed in the body, said second channel having a first opening (106c) and a second opening (113), the method including the step of connecting the first opening (106c) of the second channel to a second inlet opening (106d) via a tube and connecting the second opening (113) of the second channel to a fuel cartridge for the supply of unrecycled fuel from the fuel cartridge through the second inlet opening (106d) into the housing (100) via the second channel and the first opening (106c) in the channel.

## Patentansprüche

1. Brennstoffzellensystem, umfassend eine Brennstoffzelle (140) und ein integriertes Brennstoffrezirkufierungsmodul, umfassend ein Gehäuse (100) mit einer Kammer (101) und einer äußeren Oberfläche, einer Einlassöffnung (102) in dem Gehäuse (100) für den Fluss von nicht in Reaktion gebrachtem Brennstoff und anderen Produkten, die von der Brennstoffzelle in die Kammer (101) abgegeben werden, und eine Auslassöffnung (106a) in dem Gehäuse (100), durch die gesammelter Brennstoff aus der Kammer (101) ausgelassen wird, wobei das Gehäuse (100) außerdem einen ersten Kanal mit einer ersten Öffnung (106b) für den Fluss von gesammeltem Brennstoff, der durch die Auslassöffnung (106a) ausgelassen wird, in den ersten Kanal umfasst, wobei der erste Kanal eine zweite Öffnung (103) aufweist, die mit der Brennstoffzelle verbunden ist und durch die gesammelter Brennstoff von dem ersten Kanal aus dem Gehäuse (100) und in die Brennstoffzelle ausgelassen wird, das Brennstoffzellensystem außerdem eine Pumpe (114) umfassend, die die Auslassöffnung (106a) und die erste Öffnung (106b) verbindet, wobei die Pumpe betriebsfähig ist, um gesammelten Brennstoff, der durch die Auslassöffnung (106a) ausgelassen wurde, durch die erste Öffnung zu pumpen, **dadurch gekennzeichnet, dass** die Auslassöffnung (106a) in der äußeren Oberfläche des Gehäuses (100) derart ist, dass gesammelter Brennstoff aus dem Gehäuse (100) und in die Pumpe (114) durch die Auslassöffnung (106a) ausgelassen wird, wobei die erste Öffnung (106b) des ersten Kanals außerdem in der äußeren Oberfläche des Gehäuses (100) derart bereitgestellt wird, dass Brennstoff als Reaktion auf Betrieb der Pumpe von der Pumpe (114) zurück in das Gehäuse (100) und in den ersten Kanal durch die erste Öffnung (106b) fließt.

2. Brennstoffzellensystem nach Anspruch 1, wobei die erste Öffnung (106b) mit der Auslassöffnung (106a) unter Verwendung eines Rohrs verbindbar ist, wobei die Pumpe derart mit dem Rohr verbindbar ist, dass gesammelter Brennstoff durch die Pumpe über das Rohr fließt.

3. Brennstoffzellensystem nach einem der vorstehenden Ansprüche, umfassend einen zweiten Kanal und eine zweite Einlassöffnung (106d), die in dem Gehäuse (100) ausgebildet ist, wobei der zweite Kanal eine erste Öffnung (106c) und eine zweite Öffnung (113) und eine zweite Pumpe (115) aufweist, die die erste Öffnung (106c) des zweiten Kanals mit der zweiten Einlassöffnung (106d) über ein Rohr verbindet, und die zweite Öffnung (113) des zweiten Kanals mit einer Brennstoffpatrone für die Zuführung von nicht rezirkuliertem Brennstoff aus der Brennstoffpatrone durch die zweite Einlassöffnung (106d) in das Gehäuse (100) über den zweiten Kanal und die erste Öffnung (106c) in dem Kanal verbindbar ist.

4. Brennstoffzellensystem nach einem der vorstehenden Ansprüche, wobei die Auslassöffnung (106a), durch die gesammelter Brennstoff aus der Kammer (101) in den ersten Kanal durch die Pumpe (114) ausgelassen wird, und die zweite Einlassöffnung (106d) beide in einer Leitung in Fluidkommunikation mit der Kammer (100) angeordnet sind.

5. Brennstoffzellensystem nach einem der Ansprüche 1 bis 3, wobei die zweite Einlassöffnung (106d) derart in Kommunikation mit der Kammer (101) steht, dass rezirkulierter Brennstoff, der durch die zweite Einlassöffnung (106d) fließt, sich mit dem gesammelten Brennstoff in der Kammer (101) mischt.

6. Brennstoffzellensystem nach Anspruch 5, wobei die Brennstoffzelle eine Anode und eine Kathode umfasst und die erste Einlassöffnung (102) konfiguriert ist, um nicht in Reaktion gebrachten Brennstoff und/oder Produkte, die von der Anode abgegeben werden, zu empfangen, wobei die zweite Einlassöffnung (106d) konfiguriert ist, um nicht in Reaktion gebrachten Brennstoff und/oder Produkte, die von der Kathode abgegeben werden, zu empfangen.

7. Brennstoffzellensystem nach einem der vorstehenden Ansprüche, weiter umfassend ein gasdurchlässiges, flüssigkeitsundurchlässiges Material, das mit der Kammer (101) assoziiert ist, und eine EntlüfLungsöffnung in dem Körper zum Entlüften von Gas von dem Brennstoff, der in der Kammer (101) gesammelt wurde und durch das gasdurchlässige, flüssigkeitsundurchlässige Material passiert.

8. Brennstoffzellensystem nach einem der vorstehenden Ansprüche, umfassend eine Brennstoffpatrone, die Brennstoff enthält, wobei der Brennstoff bei Raumtemperatur aus Flüssigkeit besteht.

9. Brennstoffzellensystem nach Anspruch 8, wobei der Brennstoff mindestens eines umfasst, ausgewählt aus der Gruppe, die aus Methanol, Ethanol, Propylalkohol, Butylalkohol, Flüssigwasserstoff, Naphtha, Flüssiggas und Benzin besteht.

10. Verfahren zum Rezirkulieren von Brennstoff in einem Brennstoffzellensystem mit einer Brennstoffzelle, einem Brennstoffrezirkulierungsmodul und einer Pumpe, das Brennstoffrezirkulierungsmodul umfassend ein Gehäuse (100) mit einer Kammer (101) und einer äußeren Oberfläche, das Verfahren die Schritte enthaltend, zu gestatten, dass nicht in Reaktion gebrachter Brennstoff und andere Produkte, die von der Brennstoffzelle abgegeben wurden, durch eine Einlassöffnung (102) in dem Gehäuse (100) in die Kammer (101) fließen, und zu gestatten, dass gesammelter Brennstoff aus der Kammer (101) und dem Gehäuse (100) durch eine Auslassöffnung (106a) in der äußeren Oberfläche des Gehäuses (100) ausgelassen wird, wobei die Auslassöffnung derart mit der Pumpe verbunden ist, dass gesammelter Brennstoff durch die Auslassöffnung in die Pumpe fließt, das Gehäuse (100) außerdem einen ersten Kanal mit einer ersten Öffnung (106b) in der äußeren Oberfläche des Gehäuses (100) umfassend, wobei die erste Öffnung (106b) auch mit der Pumpe verbunden ist, das Verfahren den Schritt enthaltend, die Pumpe zu betreiben, so dass gesammelter Brennstoff durch die Auslassöffnung (106a) in die Pumpe und von der Pumpe in den ersten Kanal über die erste Öffnung (106b) ausgelassen wird, wobei der Kanal eine zweite Öffnung (103) aufweist, die mit der Brennstoffzelle verbunden ist.

11. Verfahren nach Anspruch 10, wobei das Gehäuse (100) einen zweiten Kanal und eine zweite Einlassöffnung (106d) umfasst, die in dem Körper ausgebildet sind, wobei der zweite Kanal eine erste Öffnung (106c) und eine zweite Öffnung (113) aufweist, das Verfahren den Schritt enthaltend, die erste Öffnung (106c) des zweiten Kanals mit einer zweiten Einlassöffnung (106d) über ein Rohr zu verbinden und die zweite Öffnung (113) des zweiten Kanals mit einer Brennstoffpatrone für die Zuführung von nicht rezirkuliertem Brennstoff aus der Brennstoffpatrone durch die zweite Einlassöffnung (106d) in das Gehäuse (100) über den zweiten Kanal und die erste Öffnung (106c) in dem Kanal zu verbinden.

## Revendications

1. Dispositif de pile à combustible comprenant une pile à combustible (140) et un module de recyclage de combustible intégré, comprenant une enceinte (100) ayant une chambre (101) et une surface extérieure, une ouverture d'entrée (102) dans l'enceinte (100) pour permettre l'écoulement dans la chambre (101) de combustible n'ayant pas réagi et d'autres produits émis par la pile à combustible, et une ouverture de sortie (106a) dans l'enceinte (100) à travers laquelle le combustible recueilli est déchargé de la chambre (101), dans lequel l'enceinte (100) comprend aussi un premier canal ayant une première ouverture (106b) pour permettre l'écoulement dans le premier canal du combustible recueilli déchargé à travers l'ouverture de sortie (106a), ledit premier canal ayant une deuxième ouverture (103) reliée à la pile à combustible, à travers laquelle le combustible recueilli est déchargé du premier canal hors de l'enceinte (100) et dans la pile à combustible, ledit dispositif de pile à combustible comprenant aussi une pompe (114) reliant l'ouverture de sortie (106a) et la première ouverture (106b), ladite pompe pouvant être utilisée pour pomper le combustible recueilli déchargé à travers ladite ouverture de sortie (106a) à travers ladite première ouverture, **caractérisé en ce que** l'ouverture de sortie (106a) est dans la surface extérieure de l'enceinte (100) de façon à ce que le combustible recueilli soit déchargé de l'enceinte (100) et dans la pompe (114) à travers ladite ouverture de sortie (106a), la première ouverture (106b) du premier canal étant aussi prévue dans la surface extérieure de l'enceinte (100) de façon à ce que le combustible s'écoule de la pompe (114) pour retourner dans l'enceinte (100) et dans le premier canal à travers la première ouverture (106b) en réponse au fonctionnement de ladite pompe.

2. Dispositif de pile à combustible selon la revendication 1, dans lequel la première ouverture (106b) peut être reliée à l'ouverture de sortie (106a) au moyen d'un tube, ladite pompe pouvant être reliée audit tube de façon à ce que le combustible recueilli s'écoule à travers ladite pompe via ledit tube.

3. Dispositif de pile à combustible selon l'une quelconque des revendications précédentes, comprenant un deuxième canal et une deuxième ouverture d'entrée (106d) formés dans l'enceinte (100), ledit deuxième canal ayant une première ouverture (106c) et une deuxième ouverture (113) et une deuxième pompe (115) reliant la première ouverture (106c) du deuxième canal à la deuxième ouverture d'entrée (106d) via un tube, et la deuxième ouverture (113) du deuxième canal peut être reliée à une cartouche de combustible pour l'alimentation de combustible non recyclé depuis la cartouche de combustible à travers la deuxième ouverture d'entrée (106d) et dans l'enceinte (100) via le deuxième canal et la première ouverture (106c) dans le canal.

4. Dispositif de pile à combustible selon l'une quelconque des revendications précédentes, dans lequel l'ouverture de sortie (106a) à travers laquelle le combustible recueilli est déchargé de la chambre (101) dans le premier canal à travers ladite pompe (114) et la deuxième ouverture d'entrée (106d) sont toutes deux disposées dans un conduit en communication fluidique avec la chambre (100).

5. Dispositif de pile à combustible selon l'une quelconque des revendications 1 à 3, dans lequel la deuxième ouverture d'entrée (106d) est en communication avec la chambre (101) de façon à ce que le combustible recyclé qui s'écoule à travers la deuxième ouverture d'entrée (106d) se mélange avec le combustible recueilli dans la chambre (101).

6. Dispositif de pile à combustible selon la revendication 5, dans lequel la pile à combustible comprend une anode et une cathode et la première ouverture d'entrée (102) est configurée de façon à recevoir du combustible n'ayant pas réagi et/ou des produits émis par ladite anode, la deuxième ouverture d'entrée (106d) étant configurée de façon à recevoir le combustible n'ayant pas réagi et/ou les produits émis depuis ladite cathode.

7. Dispositif de pile à combustible selon l'une quelconque des revendications précédentes, comprenant en outre un matériau perméable au gaz et imperméable au liquide associé à la chambre (101) et un évent dans le corps pour évacuer le gaz du combustible recueilli dans la chambre (101), qui passe à travers ledit matériau perméable au gaz et imperméable au liquide.

8. Dispositif de pile à combustible selon l'une quelconque des revendications précédentes, comprenant une cartouche de combustible contenant du combustible, dans lequel le combustible consiste en du liquide à la température ambiante.

9. Dispositif de pile à combustible selon la revendication 8, dans lequel le combustible comprend au moins un des éléments sélectionnés parmi le groupe comprenant le méthanol, l'éthanol, l'alcool propylique, l'alcool butylique, l'hydrogène liquéfié, le naphta, le gaz de pétrole liquéfié et l'essence.

10. Procédé de recyclage de combustible dans un dispositif de pile à combustible ayant une pile de combustible, un module de recyclage de combustible et une pompe, ledit module de recyclage de combustible comprenant une enceinte (100) ayant une chambre (101) et une surface extérieure, ce procédé comprenant les étapes consistant à permettre au combustible n'ayant pas réagi et à d'autres produits émis par la pile à combustible de s'écouler à travers une ouverture d'entrée (102) dans l'enceinte (100) pour pénétrer dans la chambre (101) et à permettre audit combustible recueilli d'être déchargé de la chambre (101) et de l'enceinte (100) à travers une ouverture de sortie (106a) dans la surface extérieure de l'enceinte (100), ladite ouverture étant reliée à ladite pompe de façon à ce que ledit combustible recueilli s'écoule à travers ladite ouverture de sortie pour pénétrer dans ladite pompe, l'enceinte (100) comprenant aussi un premier canal ayant une première ouverture (106b) dans la surface extérieure de l'enceinte (100), ladite première ouverture (106b) étant aussi reliée à ladite pompe, ce procédé comprenant l'étape consistant à faire marcher la pompe de façon à ce que le combustible recueilli soit déchargé à travers l'ouverture de sortie (106a) dans la pompe et de la pompe dans le premier canal via ladite première ouverture (106b), ledit canal ayant une deuxième ouverture (103) reliée à la pile à combustible.

11. Procédé selon la revendication 10, dans lequel l'enceinte (100) comprend un deuxième canal et une deuxième ouverture d'entrée (106d) formés dans le corps, ledit deuxième canal ayant une première ouverture (106c) et une deuxième ouverture (113), ce procédé comprenant l'étape consistant à relier la première ouverture (106c) du deuxième canal à une deuxième ouverture d'entrée (106d) via un tube et à relier la deuxième ouverture (113) du deuxième canal à une cartouche de combustible pour l'alimentation de combustible non recyclé depuis la cartouche de combustible à travers la deuxième ouverture d'entrée (106d) et dans l'enceinte (100) via le deuxième canal et la première ouverture (106c) dans le canal.
